# EUROPÄISCHE PATENTSCHRIFT

(11) **EP 0 553 367 B1**
(45) Veröffentlichungstag und Bekanntmachung des Hinweises auf die Patenterteilung: **26.04.1995**
(21) Anmeldenummer: 92101237.3
(22) Anmeldetag: 27.01.1992
(51) Int. Cl.: B29C 47/88

(54) **Vorrichtung zum Herstellen von Schlauchfolien**
Apparatus for manufacturing film tubes
Appareil pour la fabrication de pellicules tubulaires

(43) Veröffentlichungstag der Anmeldung: 04.08.1993
(73) Patentinhaber: HOSOKAWA ALPINE Aktiengesellschaft, D-86199 Augsburg (DE)
(72) Erfinder: Hofer, Werner R., W-8904 Friedberg (DE); Mahler, Franz, W-8900 Augsburg (DE); Göllner, Manfred, W-8900 Augsburg 22 (DE); Gumpert, Andreas, W-8900 Augsburg 22 (DE)
(74) Vertreter: Charrier, Rolf, Dipl.-Ing.

(56) Entgegenhaltungen:
- EP-A- 0 130 909
- DE-A- 2 947 293
- DE-A- 3 743 720
- DE-U- 8 806 020
- DE-U- 8 902 689
- US-A- 4 472 343
- US-A- 4 606 879
- US-A- 4 732 727
- US-A- 4 842 803

## Beschreibung

Die Erfindung betrifft eine Vorrichtung zum Herstellen von Schlauchfolien nach dem Oberbegriff des Anspruches 1.

Eine Vorrichtung zum Herstellen von Schlauchfolien ist in der DE 26 58 518 C2 beschrieben. Sie zeigt die typischen Verhältnisse bei der Verarbeitung von LDPE (Low Density Polyethylene). Kurz nach dem Austritt aus der Ringdüse weitet sich die Schlauchfolie zu ihrem endgültigen Durchmesser auf. Es ist ein Außenblasring vorgesehen, dessen Düsen schräg nach oben auf den Bereich der Aufweitung gerichtet sind. Nach der Flachlegevorrichtung für die Schlauchfolie ist eine Meßvorrichtung vorgesehen, mit welcher der Dickenverlauf der Folie gemessen wird. In Abhängigkeit dieses Dickenverlaufs wird der Luftdurchsatz durch die Düsen des Luftdüsenkranzes gesteuert, die Bildung von sogenannten Faßreifen auf der Schlauchfolie zu verhindern. Durch die Kühlung mittels der Düsen des Luftdüsenkranzes wird im Bereich der Kühlung eine Verdickung des Folienschlauches erreicht. Im Falle einer Erwärmung wird die Folie im erwärmten Bereich dünner.

Bei der Verarbeitung von HDPE (High Density Polyethylene) wird üblicherweise mit langem Hals gefahren, was u.a. aufgrund der im Vergleich zu LDPE höheren Dehnviskosität möglich ist. Hier hat sich gezeigt, daß die Kühlung des Schlauches wegen der Länge des langen Halses in diesem Bereich nicht gleichmäßig erfolgt und die hierdurch auftretenden Temperaturunterschiede zu Unterschieden in der Dehnviskosität führen. Diese Unterschiede in der Dehnviskosität beeinflussen die Folientoleranz nachteilig.

Um dem zu begegnen, hat man versucht, den die Ringdüse umgebenden Außenblasring in Segmente zu unterteilen, bei denen der Luftdurchsatz einstellbar ist. Ein Beispiel einer derartigen Vorrichtung ist in der DE 37 43 720 C2 beschrieben.

Eine weitere Möglichkeit, die Viskositätsunterschiede zu vermindern, sind Vorrichtungen, welche die Kühlluft, die aus dem Außenblasring austritt, in einer den langen Hals umgebenden Kammer zu führen, die mit einer oder mehreren Irisblenden versehen ist. Jedoch auch bei einer derartigen Vorrichtung treten Dehnviskositätsunterschiede im Material auf.

Die US-A-4,842,803 beschreibt eine Vorrichtung zur Herstellung von Schlauchfolien aus HDPE unter Verwendung eines langen Halses und mit einem eine Ringdüse aufweisenden Blaskopf sowie einem Außenblasring sowie einem Luftdüsenring im Bereich des Endes des langen Halses außerhalb der Schlauchfolie. Im Bereich des Endes des langen Halses befindet sich ein Innendorn und eine Vorrichtung zur Messung der Foliendicke. Der Innendorn dient hierbei dazu, der Schlauchfolie eine Spannung aufzuprägen, wozu die Schlauchfolie sich in ständigem Kontakt mit dem Innendorn befinden muß. Der Nachteil dieser Vorrichtung besteht darin, daß die Foliendicke nicht exakt genug justierbar ist und die Folie durch den Kontakt mit dem Innendorn immer eine Dehnung erfährt.

Es besteht daher die Aufgabe, eine derartige Vorrichtung so weiterzubilden, daß die Schlauchfolie keinen Dehnkräften ausgesetzt und eine gleichmäßige Einstellbarkeit der Foliendicke über den Schlauchumfang ermöglicht wird.

Gelöst wird diese Aufgabe mit den kennzeichnenden Merkmalen des Anspruches 1. Vorteilhafte Ausgestaltungen sind den Unteransprüchen entnehmbar.

Durch die Vergleichmäßigung der Dehnviskositätsunterschiede wird nicht nur eine gleichmäßig dünne Folie erhalten, sondern gleichzeitig die Festigkeit der Folie in Längs- und Querrichtung vergleichmäßigt. Weiterhin wird ein höherer Ausstoß erzielt, da der Luftdurchsatz beim Außenblasring optimal sein kann. Durch die punktuelle Kühlung mittels der Düsen des Luftdüsenkranzes wird die Längs- und Querverstreckung des Materials an der gekühlten Stelle reduziert, so daß die Folie an dieser Stelle dicker wird als ohne diese punktuelle Kühlung.

Die Kühlung durch den Luftdüsenkranz findet statt, kurz bevor das Material quer verstreckt wird. Hierbei ist ein Temperaturausgleich zwischen mehr oder weniger gekühlten Bereichen nicht mehr möglich, so daß die Temperaturbeeinflussung der Folie relativ genau an den Stellen erfolgt, wo sie auch erforderlich ist. Weiterhin wird durch den Luftdüsenkranz in einem Bereich gekühlt, wo das Material in Extrusionsrichtung längs verstreckt ist und somit in Bezug auf seine Dicke eine relativ große Oberfläche aufweist.

Durch den Innendorn wird erreicht, daß bei einseitigem Anblasen des Folienschlauchs durch den Luftdüsenkranz der Folienschlauch nicht aus seiner vertikalen Achse ausgelenkt wird.

Von großer Bedeutung ist, daß die Kühlleistung des Außenblasrings wesentlich größer sein soll als die Kühlleistung am Ende des langen Halses.

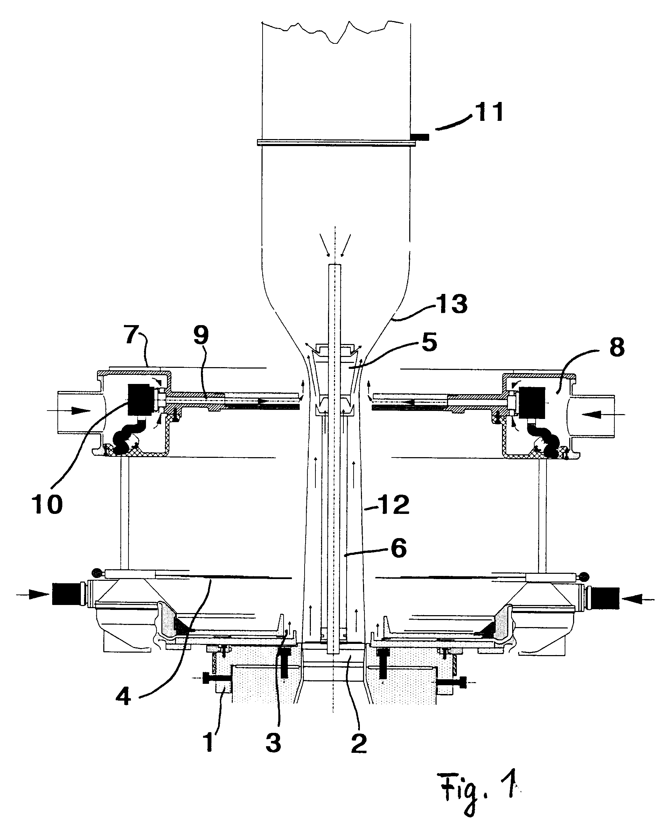

Ein Ausführungsbeispiel wird nachfolgend anhand der Zeichnung näher erläutert, die einen Schnitt durch die Vorrichtung darstellt.

Die Vorrichtung weist einen Blaskopf 1 auf, der eine Ringdüse 2 und einen die Ringdüse 2 umgebenden Außenblasring 3 umfaßt. Oberhalb der Ringdüse 2 und des Außenblasrings 3 ist eine Irisblende 4 vorgesehen. Innenseitig trägt der Blaskopf einen Innendorn 5, der auf einem Rohr 6 angeordnet ist. Außerdem weist der Dorn des Extrusionswerkzeugs eine nichtdargestellte Luftzuführung für Kühlluft auf.

Außenseitig trägt der Blaskopf einen Luftdüsenkranz 7. Dieser Luftdüsenkranz besteht aus einer ringförmigen Kammer 8, von welcher radial nach innen rohrförmige Luftdüsen 9 abgehen. Zwischen der Kammer 8 und den Düsen 9 ist jeweils ein Ventil 10 vorgesehen, das den Luftdurchsatz durch die jeweilige Düse 9 steuert. Die Düsen 9 sind in radialer Richtung teleskopierbar. Es sind beispielsweise 32 Düsen 9 vorhanden. Der Außenblasring 3 und der Luftdüsenkranz 7 sind an getrennte Luftversorgungssysteme angeschlossen.

Oberhalb des Luftdüsenkranzes 7 ist eine sich drehende Meßvorrichtung 11 zur Messung der Foliendicke vorgesehen, die von einein nichtdargestellten Träger getragen wird. Sie mißt die Foliendicke, beispielsweise kapazitiv oder mittels Infrarotstrahlung. Diese führt reversierende Drehbewegungen aus.

Das aus dem Spalt der Ringdüse 2 austretende Material bildet zuerst einen sich einschnürenden langen Hals 12, in welchem das Material längs verstreckt wird. Am Ende des langen Halses findet eine Aufweitung 13 statt, wo das Material quer verstreckt wird. Der lange Hals 12 wird durch die Luft des Außenblasrings gekühlt, wobei die Irisblende 4 der Luftführung dient. Gleichzeitig erfolgt eine Kühlung der Innenseite des langen Halses 12 durch die aus dem Dorn des Extrusionswerkzeugs austretende Kühlluft. Diese umströmt mit geringem Spalt den Innendorn 5 und tritt sodann in das obere über den Innendorn 5 überstehende Ende des Rohres 6 ein. Der in seiner Höhe einstellbare Luftdüsenkranz 7 ist so angeordnet, daß die Mündungen der Düsen 9 auf die Stelle des langen Halses gerichtet ist, bevor eine Querverstreckung des Materials stattfindet.

Die Meßvorrichtung 11 mißt bei ihrer Drehung laufend die Dicke der fertigen Folie und übermittelt ihre Meßwerte einer Steuervorrichtung, welche in Abhängigkeit des ermittelten Dickenprofils die Ventile 10 und damit den jeweiligen Luftdurchsatz durch die Düsen 9 steuert.

Die Kühlleistungen des Außenblasringes 3 und im Bereich des Endes des langen Halses 12 sind so ausgelegt, daß die Kühlleistung durch den Außenblasring 3 mindestens zehnmal größer, bevorzugt zwanzigmal größer, ist als im Bereich des Endes des langen Halses 12. Im Bereich des Endes des langen Halses sollte die Kühlleistung des Luftdüsenkranzes bevorzugt geringer sein als die Kühlleistung der den Innendorn 5 umströmenden Kühlluft.

Gegebenenfalls kann der Innendorn einen Luftdüsenkranz mit radial nach außen gerichteten Düsen aufweisen. In diesem Fall ist das Rohr 6 als Doppelrohr ausgebildet, in welchem die Kühlluft diesen Düsen zu- und wie dargestellt abgeführt wird.

Da die Meßvorrichtung 11 nur in geringfügigem Abstand oberhalb der Aufweitung 13 angeordnet ist, findet eine Signalverarbeitung mit nur geringer Todzeit statt, d.h. mit einer Zeitdauer, die nur unwesentlich größer ist als die Zeitdauer, in der sich das Material vom Luftdüsenkranz 7 zur Meßvorrichtung 11 bewegt.

Weist der Innendorn 5 wie vorerwähnt einen Luftdüsenkranz auf, dann kann der Durchsatz durch die einzelnen Düsen ebenfalls in Abhängigkeit der Meßergebnisse der Meßvorrichtung 11 gesteuert werden.

Der Innendorn 5 ist ebenfalls höheneinstellbar, so daß die Höhe des Innendorns 5 und des Luftdüsenkranzes 7 der jeweiligen Höhe des Endes des langen Halses 12 angepaßt werden kann. Durch die radiale Verstellbarkeit der Düsen 9 ist eine Anpassungsmöglichkeit an unterschiedliche Durchmesser des Folienschlauchs am Ende des langen Halses möglich.

## Patentansprüche

1. Vorrichtung zum Herstellen von Schlauchfolien aus thermoplastischem Kunststoff, wobei der Folienschlauch vor seiner Aufweitung einen langen Hals bildet mit einem Blaskopf (1), der eine Ringdüse (2) und einen Außenblasring (3) aufweist, einem im Bereich des Endes des langen Halses (12) angeordneten auf die Außenseite der Schlauchfolie gerichteten zweiten Blasring in Form eines Luftdüsenkranzes (7), einem in diesem Bereich befindlichen Innendorn (5) sowie einer Meßvorrichtung (11) zur Messung der Foliendicke der Schlauchfolie, wobei in Abhängigkeit des Meßergebnisses der Meßvorrichtung (11) der Luftdurchsatz durch die Düsen (9) des Luftdüsenkranzes (7) gesteuert wird, **dadurch gekennzeichnet**, daß der Blaskopf (1) eine Innenkühlvorrichtung trägt und der Außendurchmesser des Innendorns (5) geringfügig kleiner ist als der Innendurchmesser der Schlauchfolie im Bereich des Innendorns (5) sowie die Kühlleistung des Außenblasrings (3) mindestens zehnmal größer ist als die Kühlleistung im Bereich des Endes des langen Halses (12).

2. Vorrichtung nach Anspruch 1, **dadurch gekennzeichnet**, daß die Kühlleistung des Außenblasrings (3) etwa zwanzigmal größer ist als die Kühlleistung im Bereich des Endes des langen Halses (12).

3. Vorrichtung nach Anspruch 1 oder 2, **dadurch gekennzeichnet**, daß der Innendorn (5) als Luftdüsenkühlring ausgebildet ist, dessen Kühlleistung mindestens gleich groß ist als die Kühlleistung des Luftdüsenkranzes (7).

4. Vorrichtung nach Anspruch 3, **dadurch gekennzeichnet**, daß die Kühlleistung des Luftdüsenkühlrings größer ist als diejenige des Luftdüsenkranzes (7).

5. Vorrichtung nach Anspruch 3 oder 4, **dadurch gekennzeichnet**, daß der Luftdurchsatz durch die radial angeordneten Düsen des Luftdüsenkühlrings in Abhängigkeit des Meßergebnisses der Meßvorrichtung (11) gesteuert wird.

6. Vorrichtung nach einem der Ansprüche 1 bis 5, **dadurch gekennzeichnet**, daß der Luftdüsenkranz (7) höhenverstellbar ausgebildet ist.

7. Vorrichtung nach einem der Ansprüche 1 bis 6, **dadurch gekennzeichnet**, daß der Innendorn (5) höhenverstellbar ausgebildet ist.

8. Vorrichtung nach einem der Ansprüche 1 bis 7, **dadurch gekennzeichnet**, daß die Meßvorrichtung (11) zwischen der Frostlinie der Schlauchfolie und der Flachlegevorrichtung für die Schlauchfolie angeordnet ist.

9. Vorrichtung nach einem der Ansprüche 1 bis 8, **dadurch gekennzeichnet**, daß die Meßvorrichtung (11) sich dreht.

10. Vorrichtung nach einem der Ansprüche 1 bis 9, **dadurch gekennzeichnet**, daß die Düsen (9) des Düsenkranzes (7) in ihrer radialen Länge einstellbar sind.

## Claims

1. An equipment for producing film tubing from thermoplastic plastics, in which before being widened the film tube forms a long neck, the equipment having a blowing-extrusion head (1) which exhibits an annular nozzle (2) and an outer blowing-ring (3), with a second blowing-ring in the form of an air-nozzle crown (7) which is arranged in the region of the end of the long neck (12) and directed against the outside of the film tube, an inner mandrel (5) lying in this region as well as a measuring device (11) for measuring the thickness of film in the film tube, and the throughput of air through the nozzles (9) of the air-nozzle crown (7) being controlled in dependence upon the result of measurement from the measuring device (11), **characterized in that**
the blowing-extrusion head (1) carries an inner cooling device and the external diameter of the inner mandrel (5) is slightly less than the internal diameter of the film tube in the region of the inner mandrel (5) and also the cooling power of the outer blowing-ring (3) is at least ten times greater than the cooling power in the region of the end of the long neck (12).

2. An equipment as in Claim 1, **characterized in that**
the cooling power of the outer blowing-ring (3) is about twenty times greater than the cooling power in the region of the end of the long neck (12).

3. An equipment as in Claim 1 or 2, **characterized in that**
the inner mandrel (5) is made as an air-nozzle cooling ring the cooling power of which is at least equal to the cooling power of the air-nozzle crown (7).

4. An equipment as in Claim 3, **characterized in that**
the cooling power of the air-nozzle cooling ring is greater than that of the air-nozzle crown (7).

5. An equipment as in Claim 3 or 4, **characterized in that**
the throughput of air through the radially arranged nozzles of the air-nozzle cooling ring is controlled in dependence upon the result of measurement from the measuring device (11).

6. An equipment as in one of the Claims 1 to 5, **characterized in that**
the air-nozzle crown (7) is made adjustable for height.

7. An equipment as in one of the Claims 1 to 6, **characterized in that**
the inner mandrel (5) is made adjustable for height.

8. An equipment as in one of the Claims 1 to 7, **characterized in that**
the measuring device (11) is arranged between the freezing-line of the film tube and the equipment for laying the film tube flat.

9. An equipment as in one of the Claims 1 to 8, **characterized in that**
the measuring device (11) rotates.

10. An equipment as in one of the Claims 1 to 9, **characterized in that**
the nozzles (9) of the nozzle crown (7) are adjustable in their radial length.

## Revendications

1. Dispositif pour la fabrication de films tubulaires en matière thermoplastique, le tuyau en film formant, avant son élargissement, un long cou muni d'une tête (1) d'insufflation, laquelle présente une buse (2) de forme annulaire et une bague extérieure (3) d'insufflation, une deuxième bague d'insufflation en forme de couronne (7) de buses disposée au voisinage de l'extrémité du long cou (10) et orientée vers le côté extérieur du film tubulaire, un mandrin intérieur (5) se trouvant dans cette zone, ainsi qu'un dispositif (11) de mesure pour mesurer l'épaisseur du film tubulaire, tandis que le débit de l'air passant à travers les buses (9) de la couronne (7) est régulé en fonction du résultat des mesures effectuées par le dispositif (11), caractérisé en ce que la tête (1) supporte un dispositif de refroidissement interne et que le diamètre extérieur du mandrin intérieur (5) est légèrement plus petit que le diamètre intérieur du film tubulaire se trouvant dans la zone de ce mandrin intérieur (5), et que la puissance de réfrigération de la bague (3) d'insufflation extérieure est au moins dix fois supérieure à la puissance de réfrigération qui s'exerce au voisinage de l'extrémité du long cou (12).

2. Dispositif selon la revendication 1, caractérisé en ce que la puissance de réfrigération de la bague (3) d'insufflation extérieure est environ 20 fois supérieure à la puissance de réfrigération qui s'exerce au niveau de l'extrémité du long cou (12).

3. Dispositif selon la revendication 1 ou 2, caractérisé en ce que le mandrin intérieur est réalisé sous la forme d'une bague réfrigérante à buses de ventilation dont la puissance réfrigérante est au minimum égale à celle de la couronne de buses (7) de ventilation.

4. Dispositif selon la revendication 3, caractérisé en ce que la puissance réfrigérante de la bague réfrigérante à buses de ventilation est supérieure à celle de la couronne (7).

5. Dispositif selon la revendication 3 ou 4, caractérisé en ce que le débit de l'air passant à travers les buses de la bague réfrigérante disposées radialement est régulé en fonction du résultat des mesures obtenues par les dispositions de mesure (11).

6. Dispositif selon l'une des revendications 1 à 5, caractérisé en ce que la couronne (7) de buses de ventilation est mobile dans le sens de la hauteur.

7. Dispositif selon l'une des revendications 1 à 6, caractérisé en ce que le mandrin intérieur (5) est mobile dans le sens de la hauteur.

8. Dispositif selon l'une des revendications 1 à 7, caractérisé en ce que le dispositif de mesure (11) est disposé entre la ligne de gel du film tubulaire et le dispositif de mise à plat dudit film tubulaire.

9. Dispositif selon l'une des revendications 1 à 8, caractérisé en ce que le dispositif de mesure (11) tourne.

10. Dispositif selon l'une des revendications 1 à 9, caractérisé en ce qu'on peut régler la longueur radiale des buses (9) de la couronne (7).
